(19) **Europäisches Patentamt**

**European Patent Office**

**Office européen des brevets**

(11) **EP 0 670 648 B1**

(12) **EUROPÄISCHE PATENTSCHRIFT**

(45) Veröffentlichungstag und Bekanntmachung des Hinweises auf die Patenterteilung:
**08.08.2001   Patentblatt 2001/32**

(51) Int Cl.⁷: $H04L\ 27/22$, $H04L\ 27/20$

(21) Anmeldenummer: **95101530.4**

(22) Anmeldetag: **04.02.1995**

(54) **Verfahren und Vorrichtung zur Übertragung digitaler Signale**

Method and apparatus for transmitting digital signals

Procédé et dispositif de transmission d'un signal numérique

(84) Benannte Vertragsstaaten:
**CH DE FR GB IT LI SE**

(30) Priorität: **01.03.1994   CH 59694**

(43) Veröffentlichungstag der Anmeldung:
**06.09.1995   Patentblatt 1995/36**

(73) Patentinhaber: **Ascom Systec AG**
**5506 Mägenwil (CH)**

(72) Erfinder:
• **Günther, Christoph, Dr.**
  **CH-5442 Fislisbach (DE)**
• **Habermann, Joachim, Prof. Dr.**
  **D-35578 Wetzlar (DE)**

(74) Vertreter:
**Roshardt, Werner Alfred, Dipl.-Phys. et al**
**Keller & Partner**
**Patentanwälte AG**
**Schmiedenplatz 5**
**Postfach**
**3000 Bern 7 (CH)**

(56) Entgegenhaltungen:
**EP-A- 0 334 661**

• **IEEE INTERNATIONAL CONFERENCE ON COMMUNICATIONS - ICC/89, BOSTON, MA, USA, 11-14 JUNI 1989, Bd. 3, Seiten 1660-1664, XP 000075420 DEFLY K. ET AL.: 'DIFFERENTIAL DETECTION OF THE OQPSK SIGNAL: CODING AND DECODING'**

• **IEEE TRANSACTIONS ON VEHICULAR TECHNOLOGY, Bd. 41, Nr. 4, 1.November 1992 Seiten 401-406, XP 000362354 GHASSAN KAWAS KALEH: 'DIFFERENTIAL DETECTION VIA THE VITERBI ALGORITHM FOR OFFSET MODULATION AND MSK-TYPE SIGNALS'**

• **39TH IEEE VEHICULAR TECHNOLOGY CONFERENCE (IEEE CAT. NO.89CH2739-1), SAN FRANCISCO, CA, USA, 1-3 MAY 1989, 1989, NEW YORK, NY, USA, IEEE, USA, Seiten 83-94 vol.1, LIU C -L ET AL 'Noncoherent detection of pi /4-QPSK systems in a CCI-AWGN combined interference environment'**

• **1973 NATIONAL TELECOMMUNICATIONS CONFERENCE. VOL.II, ATLANTA, GA, USA, 26-28 NOV. 1973, 1973, NEW YORK, NY, USA, IEEE, USA, Seiten 32A/1-8, RHODES S A 'Performance of offset-QPSK communications with partially-coherent detection'**

• **IEEE TRANSACTIONS ON COMMUNICATIONS, DEC. 1980, USA, Bd. COM-28, Nr. 12, ISSN 0090-6778, Seiten 1999-2009, MORAIS D. H. ET AL.: 'The effects of filtering and limiting on the performance of QPSK, offset QPSK, and MSK systems'**

• **VTC 1994. 'CREATING TOMORROW'S MOBILE SYSTEMS'. 1994 IEEE 44TH VEHICULAR TECHNOLOGY CONFERENCE (CAT. NO.94CH3438-9), PROCEEDINGS OF IEEE VEHICULAR TECHNOLOGY CONFERENCE (VTC), STOCKHOLM, SWEDEN, 8-10 JUNE 1994, ISBN 0-7803-1927-3, 1994, NEW YORK, NY, USA, IEEE, USA, Seiten 1542-1546 vol.3, GUNTHER C. G. ET AL.: 'DOQPSK-Differential Demodulation of Filtered Offset QPSK'**

**Beschreibung**

**Technisches Gebiet**

Die Erfindung betrifft ein Verfahren zur Uebertragung digitaler Signale sowie eine Vorrichtung zur Durchführung des Verfahrens.

**Stand der Technik**

In den vergangenen Jahren wurden Offset QPSK (OQPSK) und $\pi/4$-QPSK eingehend für Anwendungen im digitalen Mobilfunk studiert. Auf der Basis solcher Untersuchungen wurde z. B. für den amerikanischen TDMA Standard zweiter Generation $\pi/4$-QPSK spezifiziert. Dasselbe Modulationsformat wird auch im japanischen zellularen Mobilfunk (JDC) und im europäischen Mobilfunk TETRA verwendet. Für diese Wahl sprachen u. a. folgende zwei Gründe: Erstens hat die Hüllkurve von $\pi/4$-QPSK-Signalen keine Nulldurchgänge, was die Erzeugung von Harmonischen und die Signalverzerrung durch Nichtlinearitäten des Verstärkers reduziert. Die Vermeidung von Harmonischen ist dabei wichtig für die Gesamtperformance des Systems, während die durch nichtlineare Verstärkung bedingten Verzerrungen für die Uebertragungsqualität einer Verbindung wichtig sind. Ein zweites Argument zugunsten von $\pi/4$-QPSK ist die Möglichkeit differentieller Codierung und entsprechend einfacher differentieller Demodulation. Dies ist vor allem dann sehr vorteilhaft, wenn die Trägerphase des Empfangssignals schnell ändert, was für Mobilfunkkanäle vielfach der Fall ist.

Im Vergleich zu $\pi/4$-QPSK hat OQPSK sehr viel kleinere Fluktuationen der Einhüllenden. Daher schneidet es in nichtlinearen Kanälen besser ab als $\pi/4$-QPSK. Da für OQPSK bis anhin jedoch keine differentielle Demodulation zur Verfügung stand, wurde jeweils $\pi/4$-DQPSK vorgezogen.

Aus der EP 0 334 661 A2 ist ein auf magnetischer Basis funktionierendes Aufnahme/Wiedergabe-Gerät bekannt. Damit können in verschiedenen Ebenen eines Magnetbandes verschiedene Arten von Signalen (Video-Signale, digitale Signale und FM Audio-Signale) gespeichert und wieder abgerufen werden. Die digitalen Signale werden vor der magnetischen Aufzeichnung mit einer mehrphasen PSK, z.B. mit einer OQDPSK (Offset Quadrature Differential Phase Shift Keying) oder einer QDPSK (Quadrature Differential Phase Shift Keying) moduliert bzw. vor der Wiedergabe wieder demoduliert. Bei der differentiellen Modulation kann dabei einer der beiden Signal-Pfade ein Verzögerungsglied enthalten.

**Darstellung der Erfindung**

Aufgabe der Erfindung ist es nun, ein Verfahren der eingangs genannten Art anzugeben, das die Vorteile von OQPSK mit denjenigen von $\pi/4$-QPSK verbindet.

Ein Verfahren der genannten Art zeichnet sich erfindungsgemäss durch folgende Schritte aus:

    a) Digitale Daten werden differentiell zu Symbolen einer Symboldauer $T_s$ codiert;
    b) die Symbole werden als zeitlich gestaffelte I- und Q-Komponenten eines Signals übertragen,
    c) wobei die Staffelung mit einer halben Symboldauer $T_s/2$ erfolgt,
    d) empfängerseitig werden I- und Q-Komponente je mit der halben Symboldauer $T_s/2$ abgetastet;
    e) eine empfängerseitig auftretende, durch die zeitliche Staffelung, durch Filterung und eine differentielle Codierung bedingte Kreuzinterferenz von I- und Q-Komponente wird durch Trellisdecodierung aufgelöst;
    f) vor der Trellisdecodierung werden mit einer Vorverarbeitung der mit $T_s/2$ abgetasteten Werte $I_k$, $I_{k-2}$, $Q_k$, $Q_{k-2}$ der I- bzw. Q-Komponente Signalkomponenten $X_k$ und $Y_k$ gemäss den folgenden Formeln ermittelt:

$$X_k = I_k \, I_{k-2} + Q_k \, Q_{k-2} \tag{I}$$

$$Y_k = Q_k \, I_{k-2} - I_k \, Q_{k-2} \tag{II}.$$

Im Rahmen der Erfindung wird also bewusst eine empfängerseitige Kreuzinterferenz zugelassen. Diese kann jedoch - da sie dem Wesen nach bekannt ist - aufgelöst werden. Vorzugsweise werden bereits senderseitig Vorkehrungen getroffen, damit die Kreuzinterferenz mit möglichst geringem Aufwand aufgelöst werden kann.

I- und Q-Komponente werden entsprechend einer halben Symboldauer $T_S/2$ gestaffelt. Zu diesem Zweck ist ein entsprechendes Verzögerungsglied von der Pulsformung im I-oder Q-Zweig des Senders vorgesehen. Empfängerseitig werden I- und Q-Komponente je mit der halben Symboldauer abgetastet.

Vorzugsweise werden I- und Q-Komponente mit einer PSK-Modulation, insbesondere einer QPSK-Modulation, übertragen. Andere Modulationsarten sind jedoch nicht grundsätzlich ausgeschlossen.

Um die Interferenz klein zu halten empfiehlt es sich, I- und Q-Komponente einer Nyquist-Pulsformung zu unterwerfen. Bevorzugt sind Pulsformen, wie "square root raised cosine". Es bietet sich z. B. aber auch an, den "raised cosine"-Puls in der I-Komponente durch einen Cosinus- und in der Q-Komponente durch einen Sinus-Puls zu ersetzen. Dann entsteht eine MSK (Minimum Shift Keying) Modulation.

Vorzugsweise arbeitet die Trellisdecodierung mit 16 Zuständen, wobei die Decodierung auf der Basis der weiter unten angegebenen Tabelle durchgeführt wird. (Die Erfindung beschränkt sich dabei natürlich nicht auf die Decodierung gemäss der beispielhaft angegebenen Tabelle. Aufgrund der Detailbeschreibung kann der Fachmann ohne weiteres die für den jeweiligen Anwendungsfall geeigneten Decodierschemata ermitteln.) In diesem speziellen Fall erfolgt die Pulsformung vorzugsweise mit einem SRRC-Puls mit roll-off Faktor zwischen 0.3 und 1.

Der Trellisdecodierung vorgeschaltet werden aus den mit der halben Symboldauer $T_s/2$ abgetasteten Werten $I_k$, $I_{k-2}$, $Q_k$, $Q_{k-2}$ der I- bzw. Q-Komponenten zwei Signalkomponenten $X_k$ und $Y_k$ gemäss den folgenden Formeln ermittelt

$$X_k = I_k\, I_{k-2} + Q_k\, Q_{k-2}$$

$$Y_k = Q_k\, I_{k-2} - I_k\, Q_{k-2}.$$

Die Erfindung eignet sich vornehmlich für Mobilfunksysteme. In der Empfängerschaltung ist dabei eine differentielle Codierung und eine zeitlich gestaffelte Taktung von I- und Q-Komponente vorzusehen. Die Empfängerschaltung weist ihrerseits eine geeignete Schaltung zur Auflösung der Kreuzinterferenz auf (z. B. eine Trellisdecodierung). Die Erfindung kann mit integrierten Schaltungen, insbesondere durch entsprechende softwaremässige Programmierung realisiert werden. Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Nachfolgend soll die Erfindung anhand von Ausführungsbeispielen und im Zusammenhang mit den Zeichnungen näher erläutert werden. Es zeigen:

Fig. 1    Ein Senderblockschaltbild;

Fig. 2    ein Empfängerblockschaltbild;

Fig. 3    Bitfehlerraten für DQPSK und DOQPSK im AWGN-Kanal;

Fig. 4    Bitfehlerraten für DQPSK und DOQPSK unter "fast Rayleigh fading" Bedingungen;

Fig. 5    eine Tabelle für die Trellisdecodierung.

## Wege zur Ausführung der Erfindung

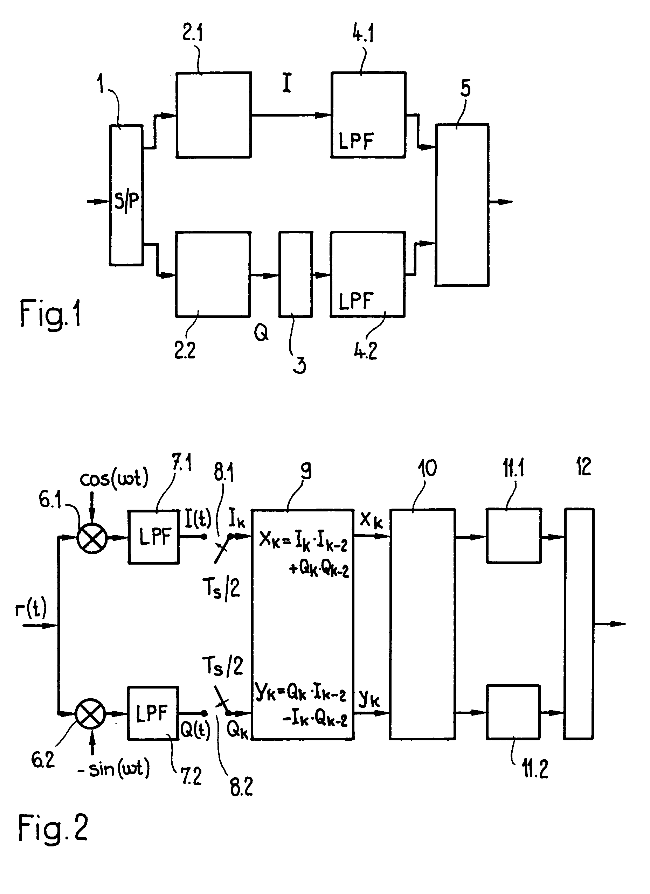

Fig. 1 zeigt ein Blockschaltbild eines Senders zur Durchführung des erfindungsgemässen Verfahrens. Es sind dabei nur die für die Erfindung wichtigen Verarbeitungsblöcke im Detail dargestellt.

Die zu übertragenden digitalen Daten werden zunächst von einem Coder 1 aufgeteilt auf Inphasenkomponente I und Quadraturkomponente Q. Dies geschieht am einfachsten durch abwechselndes Zuordnen der eintreffenden Daten an I- und Q-Komponente, wobei die Symbole sowohl in der I- als auch in der Q-Komponente eine Symboldauer $T_s$ aufweisen.

Als nächstes folgt für Inphasen- und Quadraturzweig getrennt eine differentielle Codierung mit Codern 2.1, 2.2. Die differentielle Codierung ist als solche bekannt und braucht in diesem Zusammenhang nicht näher erläutert zu werden.

Die Q-Komponente wird sodann durch einen Verzögerer 3 um eine halbe Symboldauer $T_S/2$ verzögert. Dies führt zu einer zeitlichen Staffelung der Datenübertragung in den beiden Signalkomponenten.

Als nächstes werden die Signale mit Pulsformern 4.1, 4.2 gefiltert. Gemäss einer bevorzugten Ausführungsform wird dazu ein SRRC-Puls (square root raised cosine) eingesetzt. Die auf diese Weise bandbegrenzten Signale werden einem Quadraturmodulator 5 zugeführt, welcher ein QPSK-moduliertes Uebertragungssignal erzeugt.

Fig. 2 zeigt ein Empfängerblockschaltbild zur Demodulation eines rauschbehafteten Empfangssignals r(t). Das eintreffende Empfangssignal r(t) wird in an sich bekannter Weise mit Hilfe von Mischern 6.1, 6.2 ins Basisband heruntergemischt, wobei eine Auftrennung in I- und Q-Komponente erfolgt. Diese Aufteilung in I- und Q-Komponenten stimmt in aller Regel nicht mit derjenigen am Empfänger überein. (Wäre letztere bekannt, so könnte eine kohärente Demodulation durchgeführt werden und das Problem wäre trivial.) Im Basisband werden die beiden Signalkomponenten je mit einem Filter 7.1, 7.2 tiefpass-gefiltert. Im vorliegenden Fall gelangen vorzugsweise SRRC-Filter zur Anwendung. Die resultierenden I- und Q-Signale I(t) bzw. Q(t) werden zweimal pro Symboldauer abgetastet (vgl. Abtaster 8.1, 8.2).

Als nächstes werden die Abtastwerte $I_k$ und $Q_k$ im Sinn der nachfolgenden Formeln vorverarbeitet:

$$X_k = I_k\,I_{k-2} + Q_k\,Q_{k-2} \tag{I}$$

$$Y_k = Q_k\,I_{k-2} - I_k\,Q_{k-2} \tag{II}$$

Auf der Basis der Werte $X_k$ und $Y_k$ kann ein Trellisdecodierer 10 die Kreuzinterferenz zwischen I- und Q-Komponenten auflösen.

Nach der Trellisdecodierung wird mit zwei differentiellen Decodern 11.1, 11.2 die Codierung der Codierer 2.1, 2.2 (vgl. Fig. 1) rückgängig gemacht. Als Alternative hierzu kann jedoch auch die differentielle Decodierung mit der Trellisdecodierung zusammengefasst und so die differentielle Codierung quasi in einem Schritt rückgängig gemacht werden. (Die Decoder 11.1, 11.2 erscheinen dann nicht mehr als selbständige Blöcke, da ihre Funktion in der Trellisdecodierung integriert ist.) In diesem Fall, der näher an der optimalen Decodierung ist, sieht die Trellis jedoch anders aus. Sie führt dann direkt zur Bestimmung der Symbole $\alpha_k$, $\beta_k$, wobei letztere durch die Zustände der Trellis bestimmt werden, die durch den besten Pfad besucht werden.

Ein Decoder 12 vereinigt schliesslich die geschätzten Symbole der beiden Signalpfade in einer die Funktion des Codes 1 invertierenden Art.

Im folgenden wird die Auflösung der Kreuzinterferenz von I-und Q-Komponente im einzelnen erläutert.

Im Sender wird ein serieller Datenstrom (alpha$_0$, beta$_0$, alpha$_1$, beta$_1$, ...) mit einer Datenrate $1/T_b$ in einen I- und einen Q-Strom {alpha$_k$} und {beta$_k$} aufgeteilt. Die Bits von I- und Q-Strom werden wie folgt differentiell codiert:

$$x_{2k} = \Pi_{j \leq k}\,\alpha_j;\; y_{2k+1} = \Pi_{j \leq k}\beta_j.$$

Im Empfänger sieht die Situation wie folgt aus:

In einem geradzahligen Abtastintervall $l = 2k$ sind beide Signalwerte $X_{2k}$ und $Y_{2k}$ Funktionen der übertragenen Symbole $y_{2k-3}$, $x_{2k-2}$, $y_{2k-1}$, $x_{2k}$ und $y_{2k+1}$. Es werden nun Uebergänge von einem Anfangszustand ($y_{2k-3}$, $x_{2k-2}$, $y_{2k-1}$, $x_{2k}$) in einen Endzustand ($x_{2k-2}$, $y_{2k-1}$, $x_{2k}$, $y_{2k+1}$) betrachtet. Wäre kein Rauschen vorhanden, so würden diesen Uebergängen Werte von $X_{2k}$ und $Y_{2k}$ gemäss folgenden Gleichungen zugeordnet:

$$X_{2k} = x_{2k}\,x_{2k-2} + 1/4(y_{2k-1} + y_{2k+1})(y_{2k-3} + y_{2k-1}) \tag{III}$$

$$Y_{2k} = 1/2(x_{2k-2}(y_{2k-1} + y_{2k+1}) - x_{2k}(y_{2k-3} + y_{2k-1})) \tag{IV}$$

In ähnlicher Weise werden Uebergänge von einem Anfangszustand ($x_{2k-2}$, $y_{2k-1}$, $x_{2k}$, $y_{2k+1}$) in einen Endzustand ($y_{2k-1}$, $x_{2k}$, $y_{2k+1}$, $x_{2k+2}$) zu den ungeradzahligen Abtastzeitpunkten betrachtet.

Es zeigt sich dabei, dass

$$X_{2k+1} = X_{2k} \tag{V}$$

$$Y_{2k+1} = -Y_{2k} \tag{VI}$$

gilt, wenn gleiche Anfangs- und Endzustände zu ungeradzahligen und geradzahligen Abtastzeitpunkten betrachtet werden. Dies bedeutet, dass die Trellis mit 16 Zuständen und zwei Uebergängen von und zu jedem Knoten im wesentlichen zeitinvariant ist.

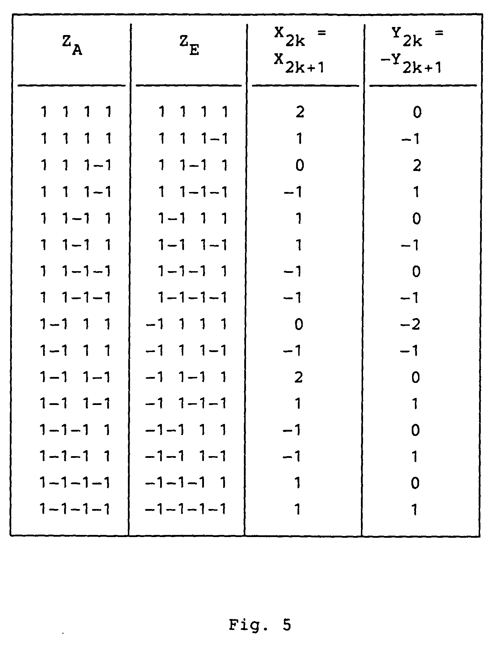

Die Tabelle gemäss Fig. 5 zeigt die Uebergänge und die zugeordneten Werte für X und Y ($Z_A$ = Anfangszustand, $Z_E$ = Endzustand). Da sowohl X als auch Y invariant sind, wenn Anfangsund Endzustand durch ihren Komplementärzustand ersetzt werden, d. h. z. B. (1,1,-1,1)-->(-1,-1,1,-1), sind nur die ersten acht Uebergänge eingeschlossen.

Es ist zu beachten, dass die beiden Ausgangssignale X und Y der Vordecodierung 9 vier resp. fünf Werte annehmen können anstelle der drei Werte bei DQPSK.

Die Trellisdecodierung 10 arbeitet vorzugsweise mit einer euklidischen Metrik. Das Metrikinkrement ist die quadratische euklidische Distanz zwischen den Werten $X_1$ und $Y_1$ und den Werten aus der Tabelle.

Zur Ermittlung eines geschätzten Datenwerts wird - in an sich bekannter Weise - jeweils derjenige Pfad mit dem besten (akkumulierten) Metrikwert für die Weiterbearbeitung ausgewählt und das älteste Symbol des Beobachtungszeitraums aus dem Pfad mit der insgesamt besten Metrik ausgegeben (vgl. Viterbi-Algorithmus).

Es ist klar, dass die Decodierung entsprechend der Tabelle selbst im Fall eines AWGN-Kanals eine Approximation darstellt, da die SRRC-Filterung im Empfänger das weisse Rauschen verfärbt und da das Rauschen nach der nichtlinearen differentiellen Vorverarbeitung nicht mehr Gauss'sch ist. Bei hohem Signalrauschabstand können die Abweichungen zum weissen Gauss'schen Rauschen vernachlässigt werden.

Die Trellisdecodierung gemäss der Tabelle beruht auf einem roll-off Faktor r = 1. Ein anderer Wert für r würde eigentlich zu einem anderen Zustandsdiagramm führen. Insbesondere wenn nicht mehr beide Nyquistkriterien erfüllt werden, muss aufgrund der unendlichen Anzahl von interferierenden Symbolen der Q-Komponente mit einem bestimmten Inphasenwert mit einem sog. reduzierten Zustandsdecodierschema gearbeitet werden. Wie die nachfolgend erläuterten Simulationsresultate zeigen, kann die Trellisdecodierung gemäss Tabelle auch für einen roll-off Faktor r < 1 herangezogen werden, ohne dass gravierende Verluste hingenommen werden müssen.

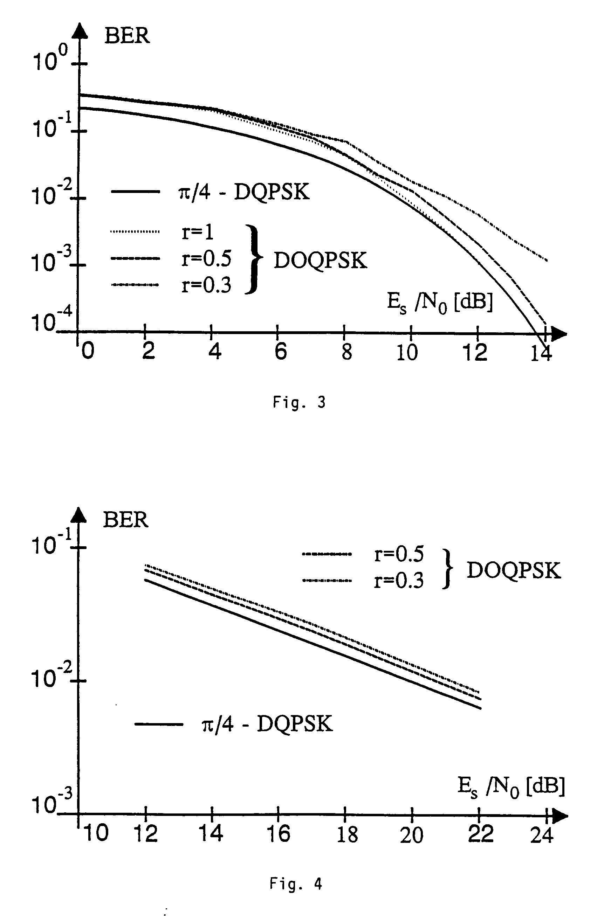

Fig. 3 zeigt Bitfehlerraten für π/4-DQPSK und DOQPSK bei einem AWGN-Kanal. Simulationen wurden mit einem roll-off Faktor r = 1, r = 0.5 und r = 0.3 durchgeführt. Fig. 3 zeigt deutlich, dass bei hohem Signalrauschabstand $E_b/N_0$ die Bitfehlerraten für DOQPSK und π/4-DQPSK konvergieren. Bemerkenswert ist, dass ein roll-off Faktor r = 0.5 im interessierenden Bereich nur zu einer Performanceverschlechterung von etwa 0.5 dB führt. Schlechter wird die Performance bei einem roll-off Faktor r = 0.3, da die erhöhte Intersymbolinterferenz zu einer irreduziblen Fehlerrate führt, die zunehmend deutlicher wird. Für die Uebertragung von digitalisierten Sprachsignalen ist ein roll-off Faktor r = 0.3 mit dem r = 1 Decoder durchaus einsetzbar.

Fig. 4 zeigt Simulationsresultate für einen Kanal mit Rayleigh fading und Jakes Doppler Spektrum. Das Produkt aus Dopplerfrequenzverschiebung $f_d$ und Symboldauer $T_s$ wurde auf 0.007 festgelegt. Bei 900 MHz und einer Datenrate von 36 KBit/s entspricht dies einer Fahrzeuggeschwindigkeit von etwa 150 km/h. Aus Fig. 4 ist deutlich zu erkennen, dass DOQPSK - ähnlich wie im AWGN-Kanal - nur unwesentlich schlechter arbeitet als π/4-DQPSK. Somit vereinigt das erfindungsgemässe DOQPSK-Verfahren im wesentlichen die Vorteile von DQPSK- und OQPSK-Signalübertragungen. Die Erfindung beschränkt sich nicht auf das im Detail ausgeführte Beispiel. Aufgrund der Erläuterungen ist es für den Fachmann ohne weiteres möglich, je nach gewählter Pulsform und in Abstimmung mit dem Modulationsverfahren eine geeignete Tabelle für die Trellisdecodierung zu entwerfen.

Zusammenfassend kann festgehalten werden, dass DOQPSK mit ähnlichen Vorteilen in Mobilfunk- und anderen Signalübertragungssystemen eingesetzt werden kann wie DQPSK.

**Patentansprüche**

**1.** Verfahren zur Übertragung digitaler Signale mit folgenden Schritten:

a) Digitale Daten werden differentiell zu Symbolen einer Symboldauer $T_s$ codiert (2.1, 2.2);
b) die Symbole werden als zeitlich gestaffelte (3) I- und Q-Komponenten eines Signals übertragen;

dadurch gekennzeichnet, dass

c) die I-und Q-Komponente zeitlich mit einer halben Symboldauer $T_s/2$ gestaffelt werden,
d) empfängerseitig I- und Q-Komponente je mit der halben Symboldauer $T_s/2$ abgetastet (8.1, 8.2) werden;
e) eine empfängerseitig auftretende, durch die zeitliche Staffelung, durch Filterung und eine differentielle Codierung bedingte Kreuzinterferenz von I- und Q-Komponente durch Trellisdecodierung (10) aufgelöst wird;
f) vor der Trellisdecodierung (10) mit einer Vorverarbeitung der mit $T_s/2$ abgetasteten Werte $I_k$, $I_{k-2}$, $Q_k$, $Q_{k-2}$ der I- bzw. Q-Komponente Signalkomponenten $X_k$ und $Y_k$ gemäss den folgenden Formeln ermittelt werden:

$$X_k = I_k \, I_{k-2} + Q_k \, Q_{k-2} \tag{I}$$

$$Y_k = Q_k \, I_{k-2} - I_k \, Q_{k-2} \tag{II}.$$

2.  Verfahren nach Anspruch 1, dadurch gekennzeichnet, dass I- und Q-Komponente mit einer PSK, insbesondere einer QPSK-Modulation übertragen werden.

3.  Verfahren nach Anspruch 1 oder 2, dadurch gekennzeichnet, dass I- und Q-Komponente zumindest näherungsweise einer Nyquistpulsformung (4.1, 4.2, 7.1, 7.2) unterworfen werden.

4.  Verfahren nach einem der Ansprüche 1 bis 3, dadurch gekennzeichnet, dass I- und Q-Komponente einer Pulsformung (4.1, 4.2, 7.1, 7.2) mit einem SRRC-Puls unterworfen werden, wobei ein roll-off Faktor r des SRRC-Pulses vorzugsweise zwischen 0.3 und 1 liegt.

5.  Verfahren nach Anspruch 3 oder nach den Ansprüchen 3 und 4, dadurch gekennzeichnet, dass die Trellisdecodierung auf der Basis von 16 Zuständen vorzugsweise gemäss folgender Tabelle erfolgt:

| $Z_A$ | | | | $Z_E$ | | | | $X_{2k} = X_{2k+1}$ | $Y_{2k} = -Y_{2k+1}$ |
|---|---|---|---|---|---|---|---|---|---|
| 1 | 1 | 1 | 1 | 1 | 1 | 1 | 1 | 2 | 0 |
| 1 | 1 | 1 | 1 | 1 | 1 | 1 | -1 | 1 | -1 |
| 1 | 1 | 1 | -1 | 1 | 1 | -1 | 1 | 0 | 2 |
| 1 | 1 | 1 | -1 | 1 | 1 | -1 | -1 | -1 | 1 |
| 1 | 1 | -1 | 1 | 1 | -1 | 1 | 1 | 1 | 0 |
| 1 | 1 | -1 | 1 | 1 | -1 | 1 | -1 | 1 | -1 |
| 1 | 1 | -1 | -1 | 1 | -1 | -1 | 1 | -1 | 0 |
| 1 | 1 | -1 | -1 | 1 | -1 | -1 | -1 | -1 | -1 |
| 1 | -1 | 1 | 1 | -1 | 1 | 1 | 1 | 0 | -2 |
| 1 | -1 | 1 | 1 | -1 | 1 | 1 | -1 | -1 | -1 |
| 1 | -1 | 1 | -1 | -1 | 1 | -1 | 1 | 2 | 0 |
| 1 | -1 | 1 | -1 | -1 | 1 | -1 | -1 | 1 | 1 |
| 1 | -1 | -1 | 1 | -1 | -1 | 1 | 1 | -1 | 0 |
| 1 | -1 | -1 | 1 | -1 | -1 | 1 | -1 | -1 | 1 |
| 1 | -1 | -1 | -1 | -1 | -1 | -1 | 1 | 1 | 0 |
| 1 | -1 | -1 | -1 | -1 | -1 | -1 | -1 | 1 | 1 |

6.  Übertragungsvorrichtung zur Durchführung des Verfahrens nach Anspruch 1, gekennzeichnet durch senderseitig:

   a) eine Schaltung zur differentiellen Codierung von digitalen Daten zu Symbolen einer Symboldauer $T_s$;
   b) Schaltungsmittel zur zeitlich mit einer halben Symboldauer $T_s/2$ gestaffelten Taktung von I- und Q-Komponente eines Signals

und empfängerseitig:

   c) eine Schaltung zur Abtastung der 1- und Q-Komponente je mit der halben Symboldauer $T_s/2$;
   d) Schaltungsmittel zur Vorverarbeitung der mit $T_s/2$ abgetasteten Werte $I_k$, $I_{k-2}$, $Q_k$, $Q_{k-2}$ der 1- bzw. Q-Komponente zur Ermittlung von Signalkomponenten $X_k$ und $Y_k$ gemäss den folgenden Formeln:

$$X_k = I_k\, I_{k-2} + Q_k\, Q_{k-2} \qquad\qquad\text{(I)}$$

$$Y_k = Q_k\, I_{k-2} - I_k\, Q_{k-2} \qquad\qquad\text{(II)}.$$

e) eine Trelllisdecodierschaltung (10) zur Auflösung der durch die zeitliche Staffelung, die Filterung und die differentielle Codierung bedingten Kreuzinterferenz von I- und Q-Komponente.

7.  Übertragungsvorrichtung nach Anspruch 6, gekennzeichnet durch senderseitige Schaltungsmittel zur Modulation der I- und Q-Komponente mit einer PSK, insbesondere einer QPSK-Modulation.

8.  Übertragungsvorrichtung nach Anspruch 6 oder 7, gekennzeichnet durch senderseitige Schaltungsmittel zur zumindest näherungsweisen Nyquistpulsformung (4.1, 4.2, 7.1, 7.2) der I- und Q-Komponente.

9.  Übertragungsvorrichtung nach einem der Ansprüche 6 bis 8, gekennzeichnet durch senderseitige Schaltungsmittel zur Pulsformung (4.1, 4.2, 7.1, 7.2) der I- und Q-Komponente mit einem SRRC-Puls, wobei ein roll-off Faktor r des SRRC-Pulses vorzugsweise zwischen 0.3 und 1 liegt.

10. Signalempfangsvorrichtung für eine Übertragungsvorrichtung nach Anspruch 6, dadurch gekennzeichnet, dass die Trellisdecodierschaltung ausgebildet ist für eine Trellisdecodierung auf der Basis von 16 Zuständen vorzugsweise gemäss folgender Tabelle:

| $Z_A$ | | | | $Z_E$ | | | | $X_{2k} = X_{2k+1}$ | $Y_{2k} = -Y_{2k+1}$ |
|---|---|---|---|---|---|---|---|---|---|
| 1 | 1 | 1 | 1 | 1 | 1 | 1 | 1 | 2 | 0 |
| 1 | 1 | 1 | 1 | 1 | 1 | 1 | -1 | 1 | -1 |
| 1 | 1 | 1 | -1 | 1 | 1 | -1 | 1 | 0 | 2 |
| 1 | 1 | 1 | -1 | 1 | 1 | -1 | -1 1 | -1 | 1 |
| 1 | 1 | -1 | 1 | 1 | -1 | 1 | 1 | 1 | 0 |
| 1 | 1 | -1 | 1 | 1 | -1 | 1 | -1 | 1 | -1 |
| 1 | 1 | -1 | -1 | 1 | -1 | -1 | 1 | -1 | 0 |
| 1 | 1 | -1 | -1 | 1 | -1 | -1 | -1 | -1 | -1 |
| 1 | -1 | 1 | 1 | -1 | 1 | 1 | 1 | 0 | -2 |
| 1 | -1 | 1 | 1 | -1 | 1 | 1 | -1 | -1 | -1 |
| 1 | -1 | 1 | -1 | -1 | 1 | -1 | 1 | 2 | 0 |
| 1 | -1 | 1 | -1 | -1 | 1 | -1 | -1 | 1 | 1 |
| 1 | -1 | -1 | 1 | -1 | -1 | 1 | 1 | -1 | 0 |
| 1 | -1 | -1 1 | 1 | -1 | -1 | 1 | -1 | -1 | 1 |
| 1 | -1 | -1 | -1 | -1 | -1 | -1 | 1 | 1 | 0 |
| 1 | -1 | -1 | -1 | -1 | -1 | -1 | -1 | 1 | 1 |

**Claims**

1.  Method for transmitting digital signals, having the following steps:

    a) digital data are coded differentially to form symbols having a symbol duration $T_s$ (2.1, 2.2);
    b) the symbols are transmitted in the form of time-graded (3) I and Q components of a signal;

    characterised in that

c) the I and Q components are time-graded with a half symbol duration $T_s/2$;

d) on the receiver side, the I and Q components are each sampled (8.1, 8.2) with the half symbol duration $T_s/2$;

e) a cross interference of the I and Q components occurring on the receiver side and caused by the time grading, by filtering and differential coding is resolved by trellis decoding (10);

f) prior to the trellis decoding (10), with a pre-processing of the values $I_k$, $I_{k-2}$, $Q_k$, $Q_{k-2}$ of the I and Q components, respectively, which values have been sampled with $T_s/2$, signal components $X_k$ and $Y_k$ are determined in accordance with the following formulae:

$$X_k = I_k\ I_{k-2} + Q_k\ Q_{k-2} \qquad\qquad\text{(I)}$$

$$Y_k = Q_k\ I_{k-2} - I_k\ Q_{k-2} \qquad\qquad\text{(II).}$$

2. Method according to claim 1, characterised in that the I and Q components are transmitted with a PSK, especially a QPSK modulation.

3. Method according to claim 1 or 2, characterised in that the I and Q components are subjected, at least by way of approximation, to Nyquist pulse shaping (4.1, 4.2, 7.1, 7.2).

4. Method according to any one of claims 1 to 3, characterised in that the I and Q components are subjected to pulse shaping (4.1, 4.2, 7.1, 7.2) with a SRRC pulse, a roll-off factor r of the SRRC pulse lying preferably between 0.3 and 1.

5. Method according to claim 3 or according to claims 3 and 4, characterised in that the trellis decoding is effected on the basis of 16 states, preferably in accordance with the following Table:

| $Z_A$ | | | | $Z_E$ | | | | $X_{Zk} = X_{2k+1}$ | $Y_{2k} = -Y_{2k+1}$ |
|---|---|---|---|---|---|---|---|---|---|
| 1 | 1 | 1 | 1 | 1 | 1 | 1 | 1 | 2 | 0 |
| 1 | 1 | 1 | 1 | 1 | 1 | 1 | -1 | 1 | -1 |
| 1 | 1 | 1 | -1 | 1 | 1 | -1 | 1 | 0 | 2 |
| 1 | 1 | 1 | -1 | 1 | 1 | -1 | -1 | -1 | 1 |
| 1 | 1 | -1 | 1 | 1 | -1 | 1 | 1 | 1 | 0 |
| 1 | 1 | -1 | 1 | 1 | -1 | 1 | -1 | 1 | -1 |
| 1 | 1 | -1 | -1 | 1 | -1 | -1 | 1 | -1 | 0 |
| 1 | 1 | -1 | -1 | 1 | -1 | -1 | -1 | -1 | -1 |
| 1 | -1 | 1 | 1 | -1 | 1 | 1 | 1 | 0 | -2 |
| 1 | -1 | 1 | 1 | -1 | 1 | 1 | -1 | -1 | -1 |
| 1 | -1 | 1 | -1 | -1 | 1 | -1 | 1 | 2 | 0 |
| 1 | -1 | 1 | -1 | -1 | 1 | -1 | -1 | 1 | 1 |
| 1 | -1 | -1 | 1 | -1 | -1 | 1 | 1 | -1 | 0 |
| 1 | -1 | -1 | 1 | -1 | -1 | 1 | -1 | -1 | 1 |
| 1 | -1 | -1 | -1 | -1 | -1 | -1 | 1 | 1 | 0 |
| 1 | -1 | -1 | -1 | -1 | -1 | -1 | -1 | 1 | 1 |

6. Transmission apparatus for carrying out the method according to claim 1, characterised by on the transmitter side:

a) a circuit for the differential coding of digital data to form symbols having a symbol duration $T_s$;

b) circuit means for clocking the I and Q components of a signal, which clocking is time-graded with a half symbol duration $T_s/2$;

and, on the receiver side:

c) a circuit for sampling the I and Q components in each case with the half symbol duration $T_s/2$;

d) circuit means for pre-processing the values $I_k$, $I_{k-2}$, $Q_k$, $Q_{k-2}$ of the I and Q components, respectively, which values have been sampled with $T_s/2$, in order to determine signal components $X_k$ and $Y_k$ in accordance with the following formulae:

$$X_k = I_k\, I_{k-2} + Q_k\, Q_{k-2} \qquad\text{(I)}$$

$$Y_k = Q_k\, I_{k-2} - Ik\, Q_{k-2} \qquad\text{(II)},$$

e) a trellis decoding circuit (10) for resolving the cross interference of the I and Q components caused by the time-grading, the filtering and the differential coding.

7. Transmission apparatus according to claim 6, characterised by circuit means on the transmitter side for modulating the I and Q components with a PSK, especially a QPSK modulation.

8. Transmission apparatus according to claim 6 or 7, characterised by circuit means on the transmitter side for the Nyquist pulse shaping (4.1, 4.2, 7.1, 7.2), at least by way of approximation, of the I and Q components.

9. Transmission apparatus according to any one of claims 6 to 8, characterised by circuit means on the transmitter side for pulse shaping (4.1, 4.2, 7.1, 7.2) the I and Q components with a SRRC pulse, a roll-off factor r of the SRRC pulse lying preferably between 0.3 and 1.

10. Signal-receiving apparatus for a transmission apparatus according to claim 6, characterised in that the trellis decoding circuit is constructed for trellis decoding on the basis of 16 states, preferably in accordance with the following Table:

| $Z_A$ | | | | $Z_E$ | | | | $X_{2k} = X_{2k+1}$ | $Y_{2k} = -Y_{Zk+1}$ |
|---|---|---|---|---|---|---|---|---|---|
| 1 | 1 | 1 | 1 | 1 | 1 | 1 | 1 | 2 | 0 |
| 1 | 1 | 1 | 1 | 1 | 1 | 1 | -1 | 1 | -1 |
| 1 | 1 | 1 | -1 | 1 | 1 | -1 | 1 | 0 | 2 |
| 1 | 1 | 1 | -1 | 1 | 1 | -1 | -1 | -1 | 1 |
| 1 | 1 | -1 | 1 | 1 | -1 | 1 | 1 | 1 | 0 |
| 1 | 1 | -1 | 1 | 1 | -1 | 1 | -1 | 1 | -1 |
| 1 | 1 | -1 | -1 | 1 | -1 | -1 | 1 | -1 | 0 |
| 1 | 1 | -1 | -1 | 1 | -1 | -1 | -1 | -1 | -1 |
| 1 | -1 | 1 | 1 | -1 | 1 | 1 | 1 | 0 | -2 |
| 1 | -1 | 1 | 1 | -1 | 1 | 1 | -1 | -1 | -1 |
| 1 | -1 | 1 | -1 | -1 | 1 | -1 | 1 | 2 | 0 |
| 1 | -1 | 1 | -1 | -1 | 1 | -1 | -1 | 1 | 1 |
| 1 | -1 | -1 | 1 | -1 | -1 | 1 | 1 | -1 | 0 |
| 1 | -1 | -1 | 1 | -1 | -1 | 1 | -1 | -1 | 1 |
| 1 | -1 | -1 | -1 | -1 | -1 | -1 | 1 | 1 | 0 |
| 1 | -1 | -1 | -1 | -1 | -1 | -1 | -1 | 1 | 1 |

**Revendications**

1. Procédé pour transmettre des signaux numériques, comprenant les étapes suivantes:

   a) des données numériques sont codées (2.1, 2.2) d'une manière différentielle pour former des symboles avec une durée de symbole $T_s$;
   b) les symboles sont transmis en tant que composantes I et Q d'un signal, échelonnées dans le temps (3);

   caractérisé en ce que

   c) les composantes I et Q sont échelonnées dans le temps avec une demi-durée de symbole $T_s/2$,
   d) des composantes I et Q possédant respectivement la demi-durée de symbole $T_s/2$ sont échantillonnées (8.1, 8.2) côté réception;
   e) une interférence croisée de composantes I et Q, qui apparaît côté réception et est conditionnée par l'étagement temporel, le filtrage et un codage différentiel, est éliminée au moyen d'un décodage de Trellis (10);
   f) les composantes de signal $X_k$ et $Y_k$ sont déterminées avant le décodage de Trellis (10) au moyen d'un prétraitement des valeurs $I_k$, $I_{k-2}$, $Q_k$, $Q_{k-2}$, échantillonné avec $T_s/2$ des composantes I et Q, conformément aux formules suivantes:

   $$X_k = I_k\,I_{k-2} + Q_k\,Q_{k-2} \tag{I}$$

   $$Y_k = Q_k\,I_{k-2} - I_k\,Q_{k-2} \tag{II}.$$

2. Procédé selon la revendication 1, caractérisé en ce que des composantes I et Q sont transmises avec une modulation PSK, notamment une modulation QPSK.

3. Procédé selon la revendication 1 ou 2, caractérisé en ce que des composantes I et Q sont soumises au moins approximativement à une mise en forme d'impulsions de Nyquist (4.1, 4.2, 7.1, 7.2).

4. Procédé selon l'une des revendications 1 à 3, caractérisé en ce que des composantes I et Q sont soumises à une mise en forme d'impulsions (4.1, 4.2, 7.1, 7.2) avec une impulsion SRRC, le facteur roll-off r de l'impulsion SRRC étant compris de préférence entre 0,3 et 1.

5. Procédé selon la revendication 3 ou l'une des revendications 3 et 4, caractérisé en ce que le décodage de Trellis est exécuté sur la base de 16 états de préférence conformément au tableau suivant:

| $Z_A$ | | | | $Z_E$ | | | | $X_{2k}=X_{2k+1}$ | $Y_{2k}=-Y_{2k+1}$ |
|---|---|---|---|---|---|---|---|---|---|
| 1 | 1 | 1 | 1 | 1 | 1 | 1 | 1 | 2 | 0 |
| 1 | 1 | 1 | 1 | 1 | 1 | 1 | -1 | 1 | -1 |
| 1 | 1 | 1 | -1 | 1 | 1 | -1 | 1 | 0 | 2 |
| 1 | 1 | 1 | -1 | 1 | 1 | -1 | -1 | -1 | 1 |
| 1 | 1 | -1 | 1 | 1 | -1 | 1 | 1 | 1 | 0 |
| 1 | 1 | -1 | 1 | 1 | -1 | 1 | -1 | 1 | -1 |
| 1 | 1 | -1 | -1 | 1 | -1 | -1 | 1 | -1 | 0 |
| 1 | 1 | -1 | -1 | 1 | -1 | -1 | -1 | -1 | -1 |
| 1 | -1 | 1 | 1 | -1 | 1 | 1 | 1 | 0 | -2 |
| 1 | -1 | 1 | 1 | -1 | 1 | 1 | -1 | -1 | -1 |
| 1 | -1 | 1 | -1 | -1 | 1 | -1 | 1 | 2 | 0 |
| 1 | -1 | 1 | -1 | -1 | 1 | -1 | -1 | 1 | 1 |

(suite)

| $Z_A$ | | | | $Z_E$ | | | | $X_{2k}=X_{2k+1}$ | $Y_{2k}=-Y_{2k+1}$ |
|---|---|---|---|---|---|---|---|---|---|
| 1 | -1 | -1 | 1 | -1 | -1 | 1 | 1 | -1 | 0 |
| 1 | -1 | -1 | 1 | -1 | -1 | 1 | -1 | -1 | 1 |
| 1 | -1 | -1 | -1 | -1 | -1 | -1 | 1 | 1 | 0 |
| 1 | -1 | -1 | -1 | -1 | -1 | -1 | -1 | 1 | 1 |

6. Dispositif de transmission pour la mise en oeuvre du procédé selon la revendication 1, caractérisé par côté émetteur:

a) un circuit pour réaliser le codage différentiel de données numériques en des symboles ayant une durée de symbole $T_s$;
b) des moyens de commutation pour commander de façon cadencée, avec un échelonnement dans le temps avec une demi-durée de symbole $T_s/2$, de composantes I et Q d'un signal, et

côté réception:

c) un circuit pour échantillonner les composantes I et Q respectivement avec la demi-durée de symbole $T_s/2$;
d) des moyens de commutation pour réaliser le prétraitement des valeurs $T_k$, $T_{k-2}$, $Q_k$, $Q_{k-2}$, échantillonnées avec $T_s/2$, des composantes I et Q pour la détermination de composantes de signal $X_k$ et $Y_k$ conformément aux formules suivantes :

$$X_k = I_k \, I_{k-2} + Q_k \, Q_{k-2} \tag{I}$$

$$Y_k = Q_k \, I_{k-2} - I_k \, Q_{k-2} \tag{II}.$$

e) un circuit de décodage de Trellis (10) pour éliminer l'interférence croisée de composantes I et Q, conditionnées par l'échelonnement dans le temps, le filtrage et le codage différentiel.

7. Dispositif de transmission selon la revendication 6, caractérisé par des moyens de commutation situés côté émetteur pour moduler les composantes I et Q avec une modulation PSK, notamment une modulation QPSK.

8. Dispositif de transmission selon la revendication 6 ou 7, caractérisé en par des moyens de commutation situés côté émetteur pour réaliser au moins approximativement la mise en forme d'impulsions de Nyquist (4.1, 4.2, 7.1, 7.2) des composantes I et Q.

9. Dispositif de transmission selon l'une des revendications 6 à 8, caractérisé par des moyens de commutation situés côté émetteur pour la mise en forme d'impulsions (4.1, 4.2, 7.1, 7.2) des composantes I et Q avec une impulsion SRRC, un facteur roll-off r de l'impulsion SRRC étant compris de préférence entre 0,3 et 1.

10. Dispositif de réception de signaux pour un dispositif de transmission selon la revendication 6, caractérisé en ce que le circuit de décodage de Trellis est réalisé pour un décodage de Trellis sur la base de 16 états, de préférence conformément au tableau suivant :

| $Z_A$ | | | | $Z_E$ | | | | $X_{2k}=X_{2k+1}$ | $Y_{2k}=-Y_{2k+1}$ |
|---|---|---|---|---|---|---|---|---|---|
| 1 | 1 | 1 | 1 | 1 | 1 | 1 | 1 | 2 | 0 |
| 1 | 1 | 1 | 1 | 1 | 1 | 1 | -1 | 1 | -1 |
| 1 | 1 | 1 | -1 | 1 | 1 | -1 | 1 | 0 | 2 |
| 1 | 1 | 1 | -1 | 1 | 1 | -1 | -1 | -1 | 1 |

(suite)

| $Z_A$ | | | | $Z_E$ | | | | $X_{2k}=X_{2k+1}$ | $Y_{2k}=-Y_{2k+1}$ |
|---|---|---|---|---|---|---|---|---|---|
| 1 | 1 | -1 | 1 | 1 | -1 | 1 | 1 | 1 | 0 |
| 1 | 1 | -1 | 1 | 1 | -1 | 1 | -1 | 1 | -1 |
| 1 | 1 | -1 | -1 | 1 | -1 | -1 | 1 | -1 | 0 |
| 1 | 1 | -1 | -1 | 1 | -1 | -1 | -1 | -1 | -1 |
| 1 | -1 | 1 | 1 | -1 | 1 | 1 | 1 | 0 | -2 |
| 1 | -1 | 1 | 1 | -1 | 1 | 1 | -1 | -1 | -1 |
| 1 | -1 | 1 | -1 | -1 | 1 | -1 | 1 | 2 | 0 |
| 1 | -1 | 1 | -1 | -1 | 1 | -1 | -1 | 1 | 1 |
| 1 | -1 | -1 | 1 | -1 | -1 | 1 | 1 | -1 | 0 |
| 1 | -1 | -1 | 1 | -1 | -1 | 1 | -1 | -1 | 1 |
| 1 | -1 | -1 | -1 | -1 | -1 | -1 | 1 | 1 | 0 |
| 1 | -1 | -1 | -1 | -1 | -1 | -1 | -1 | 1 | 1 |

Fig.1

Fig.2

Fig. 3

Fig. 4

| $Z_A$ | $Z_E$ | $X_{2k} =$ $X_{2k+1}$ | $Y_{2k} =$ $-Y_{2k+1}$ |
|:---:|:---:|:---:|:---:|
| 1 1 1 1 | 1 1 1 1 | 2 | 0 |
| 1 1 1 1 | 1 1 1−1 | 1 | −1 |
| 1 1 1−1 | 1 1−1 1 | 0 | 2 |
| 1 1 1−1 | 1 1−1−1 | −1 | 1 |
| 1 1−1 1 | 1−1 1 1 | 1 | 0 |
| 1 1−1 1 | 1−1 1−1 | 1 | −1 |
| 1 1−1−1 | 1−1−1 1 | −1 | 0 |
| 1 1−1−1 | 1−1−1−1 | −1 | −1 |
| 1−1 1 1 | −1 1 1 1 | 0 | −2 |
| 1−1 1 1 | −1 1 1−1 | −1 | −1 |
| 1−1 1−1 | −1 1−1 1 | 2 | 0 |
| 1−1 1−1 | −1 1−1−1 | 1 | 1 |
| 1−1−1 1 | −1−1 1 1 | −1 | 0 |
| 1−1−1 1 | −1−1 1−1 | −1 | 1 |
| 1−1−1−1 | −1−1−1 1 | 1 | 0 |
| 1−1−1−1 | −1−1−1−1 | 1 | 1 |

Fig. 5